# EUROPÄISCHE PATENTSCHRIFT

(11) **EP 3 153 823 B1**
(45) Veröffentlichungstag und Bekanntmachung des Hinweises auf die Patenterteilung: **12.09.2018**
(21) Anmeldenummer: 16178483.0
(22) Anmeldetag: 07.07.2016
(51) Int. Cl.: G01D 11/30

(54) **BEFESTIGUNGSEINHEIT**
FIXING UNIT
UNITE DE FIXATION

(30) Priorität: 15.09.2015 DE 102015115561
(43) Veröffentlichungstag der Anmeldung: 12.04.2017
(73) Patentinhaber: SICK AG, 79183 Waldkirch (DE)
(72) Erfinder: Döbele, Christian, 79341 Kenzingen (DE); Jägle, Stefan, 79312 Emmendingen (DE); Scheickenpflug, Michael, 79348 Freiamt (DE)

(56) Entgegenhaltungen:
- WO-A1-2007/082577
- CN-B- 102 272 806
- DE-A1- 1 935 977
- DE-A1-102013 113 537
- FR-A1- 2 780 431
- US-A1- 2009 107 209
- US-B1- 6 203 366

## Beschreibung

Die Erfindung betrifft eine Befestigungseinheit zur Befestigung eines Sensors an einem Montagekörper oder einer Anlage.

In der Automatisierungstechnik ist es üblich, dass Sensoren an einer Montagestange oder an Anlagen selbst befestigt werden. Dadurch werden die Sensoren räumlich genau dort montiert, wo sich das Objekt, welches durch den Sensor detektiert werden soll, befindet. Die Montagestange ist dabei Bestandteil eines Stangenhaltesystems, wo die Montagestange meistens ein Rundprofil aufweist. Die so montierten Sensoren müssen eine maximale Festigkeit gegenüber unabsichtlicher Verstellung durch äußere Umstände aufbringen. Allerdings müssen für unterschiedliche Befestigungsaufgabenstellungen verschiedene Befestigungseinheiten genutzt werden. Bei bekannten Befestigungseinheiten besteht der Nachteil, aufgrund der vorhandenen Drehmomentsteifigkeit nur bedingt stabil zu sein.

Die US 6 203 366 B1 offenbart eine Anordnung zur Befestigung eines Sensors an einer bevorzugt aus Kunststoff gebildeten Platte eines Kraftfahrzeugs, dadurch gekennzeichnet, dass an dem Kunststoffteil ein Befestigungsansatz einstückig angegossen ist, dass eine Aufnahmehülse für den Sensor auf den Ansatz aufgesteckt und an mindestens einer geeigneten Verbindungsstelle die Befestigungshülse mit dem Befestigungsansatz vorzugsweise durch eine nicht lösbare Verbindung, insbesondere Schweißen, verbunden ist.

Die FR 2 780 431 offenbart einen Ständer für Sonnenschirme. Der Ständer besteht aus einem zweiteiligen Träger und einem kreisförmigen Tisch mit Löchern für den Mast und einer Verriegelungsanordnung mit einem Halteelement in dem Loch, um den Mast zu stützen, und ein Klemmelement, um den Mast an Ort und Stelle zu befestigen. Das Halteelement ist ein U-förmiges Metallband, dessen Spitzen horizontal gebogen sind, und das Klemmelement weist einen Hohlabschnitt auf, der über eine der Spitzen passt und ein Kunststoffdruckglied, das beim Öffnen des Elements in eine horizontale Position gegen den Mast drückt.

Die CN 102272806 stellt eine Vorrichtung zum Anbringen eines drahtlosen Gerätegehäuses bereit. Ein erster Befestigungsring und ein zweiter Befestigungsring sind mittels Befestigungsschrauben an einem drahtlosen Gerätegehäuse befestigt. Der erste Befestigungsring und der zweite Befestigungsring sind von oben auf einen Messdisplayabschnitt aufgesetzt und ein gemeinsamer Befestigungsbolzen wird durch die Ringe geführt zur Befestigung. Die Konfiguration ermöglicht es, dass ein drahtloses Gerät unabhängig von einem Messgerät ist und einfach an dem Messgerät montiert werden kann.

Die US 2009/0107209 A1 offenbart einen selbstkalibrierenden Sensor. Der Sensor umfasst ein Gehäuse, einen mit dem Gehäuse gekoppelten Eingangshebel, der so konfiguriert ist, dass er mit einer zu erfassenden Vorrichtung in Kontakt kommt, und ein Betätigungselement, das so konfiguriert ist, dass es automatisch eine Ausgabevorrichtung in eine kalibrierte Position versetzt. Der Sensor weist auch einen Nockenring auf, der so konfiguriert ist, dass er die Ausgabevorrichtung in die kalibrierte Position bewegt, basierend auf einem von dem Betätigungselement empfangenen Eingang und einem mit dem Eingangshebel gekoppelten Verriegelungsring.

Die DE 10 2013 113 537 A1 offenbart einen Halter für einen Sensor zur Befestigung des Sensors an einem Montagekörper, wobei der Sensor mit einem Verbindungselement verbunden ist, wobei ein Klemmhalter vorgesehen ist, der den Montagekörper umgreift, dadurch gekennzeichnet, dass der Klemmhalter mit dem Verbindungselement verbunden ist und der Klemmhalter durch das Verbindungselement gegen den Montagekörper gedrückt ist und gleichzeitig der Sensor durch das Verbindungselement befestigt ist, wobei eine Klemmkraft zwischen Klemmhalter und Sensor, sowie zwischen Klemmhalter und Montagekörper unterschiedlich ist.

Die WO 2007/082577 A1 offenbart eine Einrichtung zum Halten und Positionieren von Geräten, Werkstücken und Werkzeugen, mit einer Konsole mit einem Tragarm, an dessen ersten Endbereich eine mit einem Gerätehalter verbindbare Scharniergelenkanordnung mit zwei um 90 Grad versetzten Scharnierachsen angeordnet ist, und mit einer Positioniervorrichtung zum Einstellen mittels Ausgleichstechnik und Spannen eines Gerätes, Werkstückes oder Werkzeuges, mit einem Fußteil und einem Flanschteil zur Aufnahme des Gerätes, Werkstückes oder Werkzeuges.

Die DE 1 935 977 offenbart einen Klemmverbinder für Stangenprofile mit gleichem oder unterschiedlichem Durchmesser und Querschnitt, wobei jeweils gleiche, an ihrer einander zugekehrten Fläche mit einer Nut zur Aufnahme der Stangenprofile versehene, scheibenförmige Grundelemente unter Zwischenlage der Stangenprofile paarweise spiegelbildlich aufeinanderliegend, mittels eines Verbindungselementes aneinandergepresst sind.

Der Erfindung liegt die Aufgabe zugrunde, eine Befestigungseinheit anzugeben, welche die Drehmomentsteifigkeit, insbesondere in Zwischengelenken, erhöht.

Erfindungsgemäß ist die Aufgabe gemäß Anspruch 1 gelöst.

Gemäß der Erfindung ist die Verzahnung in wenigstens einer der Befestigungseinheiten integriert, direkt im gegenseitigen Eingriff und generiert den Formschluss. Die Verzahnung kann dabei so angeordnet sein, dass diese nach einem Verbinden der Befestigungselemente nicht mehr sichtbar ist und somit vor einer Verschmutzung geschützt ist.

Weiter weist das erste Befestigungselement zur Umschlingung einer Montagestange eine durchgängige Öffnung auf, wobei die Öffnung in einen Spalt übergeht, welcher das Befestigungselement radial teilweise trennt. Somit lässt sich bei offenem Spalt die Montagestange einfach in das Befestigungselement einlegen, wobei nach Einschieben der Montagestange der Spalt durch eine kraftschlüssige Verbindung geschlossen wird, wodurch die Montagestange in dem Befestigungs-element kraft- und reibschlüssig fixiert wird.

In Weiterbildung der Erfindung ist zwischen den zwei Befestigungselementen ein Adapter angeordnet, der ebenfalls eine Verzahnung aufweist, um eine formschlüssige Verbindung mit den Befestigungselementen zu bilden. Durch verschiedene Adapter kann der Abstand zwischen den zwei Befestigungselementen angepasst werden.

Vorteilhafterweise weisen zur formschlüssigen Verbindung die beiden Befestigungselemente auf einander zugewandten Seiten jeweils eine Verzahnung, vorzugsweise eine Verrasterung, auf, die ineinander greifen. Durch diese Verrasterung wird eine sehr stabile formschlüssige Verbindung hergestellt, welche zuverlässig eine unbeabsichtigte Verstellung verhindert. Bei dieser Befestigungseinheit werden keine Kerben und Deformationen auf die, von der Befestigungseinheit gehaltenen Montagestangen eingebracht. Gleichzeitig wird die Drehmomentsteifigkeit erhöht. Insbesondere durch die Verrasterung ist es möglich, einen Sensor, der an dieser Befestigungseinheit positioniert ist, in seiner Position beliebig einzustellen.

In einer Variante weist das zweite Befestigungselement mindestens eine erste Bohrung zur Aufnahme eines kraftschlüssigen Verbindungselementes zur Befestigung des zweiten Befestigungselementes an einer Fläche auf, während sowohl das erste als auch das zweite Befestigungselement eine zweite Bohrung zur Aufnahme eines zweiten kraftschlüssigen Verbindungselementes zur Befestigung des ersten Befestigungselementes an dem zweiten Befestigungselement umfassen, wobei die zweite Bohrung des ersten Befestigungselementes durchgängig ausgebildet ist. Mittels dieser Ausgestaltung kann die Befestigungseinheit einfach an einer Anlage fixiert werden, wodurch eine besonders stabile und verdrehsichere Anordnung realisiert wird.

In einer Weiterbildung weisen das erste und das zweite Befestigungselement axial je eine durchgängige Öffnung zur Aufnahme der Montagestange auf, wobei jede Öffnung radial in einen Spalt übergeht, welcher kraftschlüssig zur Fixierung der Montagestange verengt ist. Somit können mittels der vorgeschlagenen Befestigungseinheit auch zwei Montagestangen aneinander fixiert werden und dabei eine gelenkartige Verbindung bilden.

In einer Ausführungsform sind die beiden Befestigungselemente über eine zentrische Verbindung kraftschlüssig miteinander verbunden, wodurch gleichzeitig durch Einengung des Spaltes die Montagestangen fixiert werden. Somit kann durch eine einzige Verbindung nicht nur die Arretierung der Montagestangen, sondern gleichzeitig auch die Befestigung der beiden Befestigungselemente der Befestigungseinheit untereinander realisiert werden, was die Herstellungskosten reduziert.

In einer Ausgestaltung weist der Sensor eine Schwalbenschwanzgeometrie auf, welche in eine an der Außenseite des zweiten Befestigungselementes positionierte Schwalbenschwanzaufnahme eingreift. Mittels einer solchen Schwalbenschwanzeinheit lässt sich der Sensor einfach mit nur einem Montagevorgang an den Befestigungselementen positionieren.

In einer Ausführungsform ist der Sensor in der Schwalbenschwanzgeometrie positioniert, wobei die, den Sensor aufnehmende Schwalbenschwanzgeometrie eine Positionsmarkierung aufweist. Mittels einer solchen Positionsmarkierung wird sichergestellt, dass der neue Sensor genau dieselbe Position einnimmt wie der vorher in dieser Befestigungseinheit angebrachte Sensor.

In einer Variante ist eine Halteplatte des Sensors zentrisch auf einem der Befestigungselemente angeordnet, wobei die Halteplatte, vorzugsweise zentrisch, ein Gewinde mit einem tiefgezogenen Bereich aufweist, das in eine, am Befestigungselement ausgebildete Durchgangsbohrung eingreift. Durch diese Ausgestaltung wird sichergestellt, dass auch spezielle Halteplatten, die für bestimmte Sensortypen notwendig sind, problemlos an der vorgeschlagenen Befestigungseinheit ohne großen Aufwand befestigt werden können.

In einer weiteren Ausführungsform ist zwischen Sensor und Halteplatte eine Verdrehsicherung geklemmt, wobei die Verdrehsicherung ein Gegengewinde aufweist. Durch diese Verdrehsicherung wird verhindert, dass sich der Sensor durch unachtsame Betätigung in seiner Position verschiebt.

In Weiterbildung der Erfindung ist das Befestigungselement quer zu der Montagestange angeordnet und der Sensor direkt an einer Aufnahme des Befestigungselements angeordnet. Dadurch können die Sensoren beispielsweise dicht nebeneinander montiert werden.

In einer weiteren Variante ist der Sensor über eines der Befestigungselemente an der ebenen Fläche befestigt, wobei das Befestigungselement eine drehbare Schnittstelle für den Sensor bildet. Eine solche drehbare Schnittstelle ist bei der Justierung des Sensors von besonderer Bedeutung, da dabei der Sensor in die bevorzugte Situation bei gegebener Feinabstimmung eingestellt werden kann.

Vorteilhafterweise ist zwischen der ebenen Fläche und dem Befestigungselement eine Schwenkplatte angeordnet, welche gegenüber der ebenen Fläche eine plane Seite und gegenüber dem Befestigungselement eine konkav-sphärisch ausgebildete Seite aufweist. Damit kann der Sensor, der an dem Befestigungselement arretiert ist, räumlich verschwenkt werden, indem das Befestigungselement über die konkavsphärische Fläche bewegt wird.

In einer Ausgestaltung weist das Befestigungselement dezentral zwei durchgängig radial offene Aufnahmen für je eine Montagestange auf, die annähernd senkrecht zueinander ausgebildet sind, wobei die Aufnahme nahe dem Rand des Befestigungselementes angeordnet ist und in Richtung Zentrum des Befestigungselementes ein sich radial erstreckender Spalt zur axial reibschlüssigen und radial formschlüssigen Befestigung der Montagestange an dem Befestigungselement anschließt. Durch diese Ausgestaltung ist ein einfaches Einklemmen der Montagestange in die Befestigungseinheit möglich. Nachdem die Position der Befestigungseinheit an der Montagestange eingestellt ist, wird durch die axial reibschlüssige Befestigung die Montagestange fixiert.

Die Erfindung lässt zahlreiche Ausführungsformen zu. Einige davon sind in den in der Zeichnung dargestellten Figuren näher dargestellt.

Es zeigen:

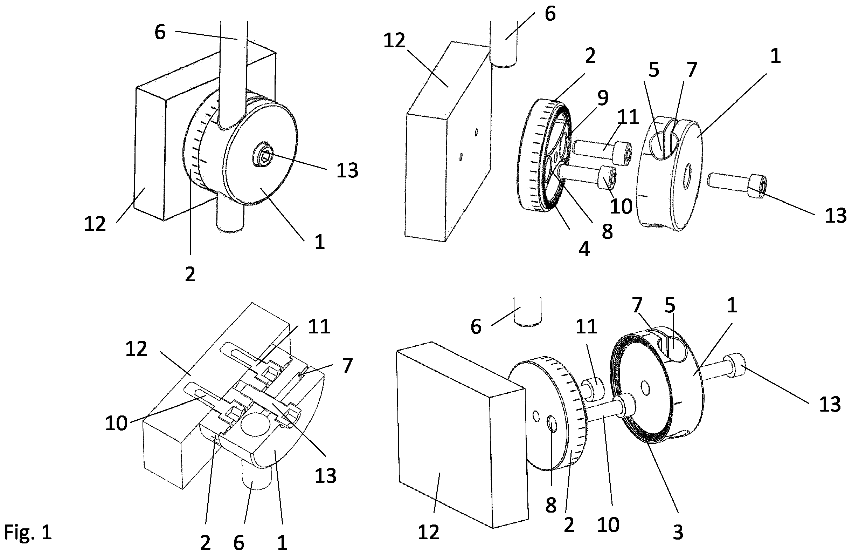

- Fig. 1 bis 20: Beispiele der Befestigungseinheit.

Gleiche Bezugszeichen sind mit gleichen Merkmalen gekennzeichnet.

In Fig. 1 ist ein erstes Ausführungsbeispiel der erfindungsgemäßen Befestigungseinheit gezeigt, welches aus zwei scheibenförmigen Befestigungselementen 1, 2 besteht. Dabei weist ein erstes Befestigungselement 1 auf einer Innenseite eine auf einen kleineren Durchmesser zurückversetzte Verzahnung 3 auf, und das zweite Befestigungselement 2 weist ebenfalls auf der, dem ersten Befestigungselement 1 zugewandten Seite eine auf einen kleineren Durchmesser zurückgesetzte Verzahnung 4 auf. Die Verzahnungen 3, 4 sind dabei untereinander kompatibel. Das erste Befestigungselement 1 umfasst eine durchgängige Öffnung 5 zur Aufnahme einer Montagestange 6, welche zum Rand in einen Spalt 7 übergeht. Das zweite Befestigungselement 2 weist dezentral zwei durchgängige Öffnungen 8, 9 zur Aufnahme je einer Schraube 10, 11 auf, mit welcher das zweite Befestigungselement 2 an einer ebenen Fläche 12, beispielsweise einer Anlage oder einer Wand, befestigt wird.

Bei der Montage wird die Montagestange 6 mit einem großen Umschlingungswinkel reibungsschlüssig an dem ersten Befestigungselement 1 befestigt. Anschließend wird das erste Befestigungselement 1 formschlüssig mittels der Verzahnungen 3, 4 an dem zweiten Befestigungselement 2 fixiert. Zusätzlich werden erstes und zweites Befestigungselement 1, 2 über eine kraftschlüssige Verbindung, die durch eine zentrische Schraubverbindung 13 realisiert wird, nochmals miteinander fixiert. Diese Anordnung sorgt für ein hohes Drehmomentaufnahmevermögen in diesem Befestigungspunkt.

Die Montagestange 6 ist dabei in ihrer axialen Ausdehnung in der Befestigungseinheit verdrehbar. Somit ist das erste Befestigungselement 1 mit der Montagestange 6 zum zweiten Befestigungselement 2 in der Anlage abhängig von der Verzahnung 3, 4 um 360° verdreh- bzw. arretierbar.

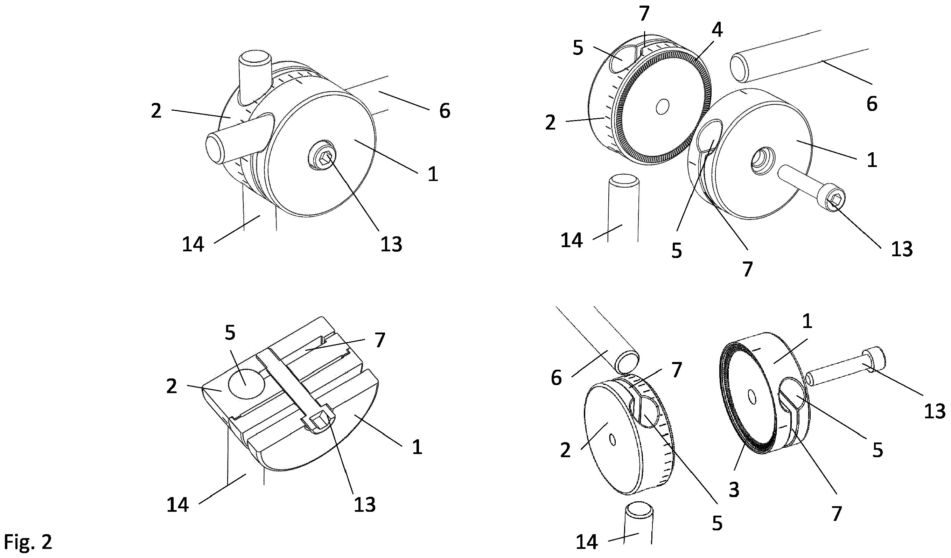

Ein zweites Ausführungsbeispiel der erfindungsgemäßen Befestigungseinheit ist in Fig. 2 dargestellt, wo eine Zwischenpunktfixierung beschrieben wird, die eine gelenkmäßige Verbindung zwischen zwei Montagestangen 6, 14 erlaubt. Auch hierbei werden das erste und das zweite Befestigungselement 1, 2 über die zurückgesetzten, verdeckten Verzahnungen 3, 4 fest miteinander arretiert. Die beiden Befestigungselemente 1, 2 sind dabei ähnlich ausgebildet, wobei jedes Befestigungselement 1, 2 eine durchgängige Öffnung 5 aufweist, die radial in einem Spalt 7 aufgeht, um je eine Montagestange 6, 14 zu fixieren. Um die richtige Position der einzelnen Montagestangen 6, 14 zueinander zu finden, sind die Befestigungselemente 1, 2 nach Einführung der Montagestangen 6, 14 um etwa 160° verdreh- und anschließend arretierbar. Auch in dieser Ausgestaltung werden das erste und das zweite Befestigungselement 1, 2 über die Schraubverbindung 13 zentrisch miteinander verbunden.

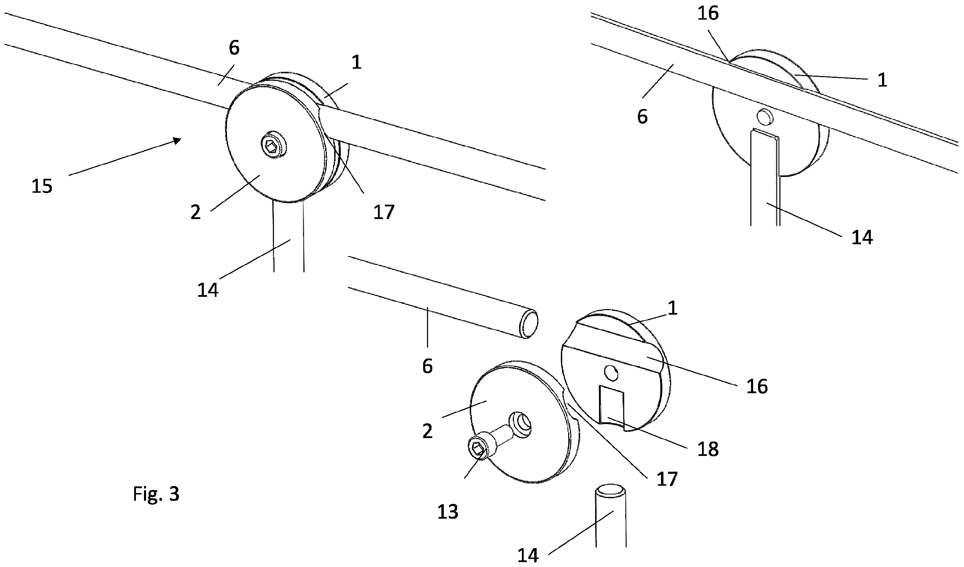

Fig. 3 zeigt eine Befestigungseinheit, bei welchem ein fixes Abzweigelement 15 durch die Befestigungselemente 1, 2 gebildet wird. Dabei weist das Befestigungselement 1 eine Lagerposition für die aufzunehmende Montagestange 6 auf, welche als Halbschale 16, 17 ausgebildet ist. Zwischen die beiden Befestigungselemente 1, 2 wird die zu fixierende Montage-stange 6 eingeklemmt, wobei jeweils eine Halbschale 16, 17 des jeweiligen Befestigungselementes 1, 2 die Montagestange 6 aufnimmt. Diese Ausführung hat den Vorteil, dass als Querverbinder nicht nur eine Montagestange 6, sondern mehrere Montagestangen 6, 14 durch die Befestigungseinheit fixiert werden können. Dies ist in Fig. 3 gezeigt, wo senkrecht von unten ein Ende einer zweiten Montagestange 14 in eine entsprechend halbschalenförmig ausgebildete Ausnehmung 18, 19 der beiden Befestigungselemente 1, 2 eingreift. Die beiden Befestigungselemente 1, 2 mit den entsprechenden Halbschalen 16, 18 bzw. 18, 17 werden dann einfach zentrisch über eine Schraubverbindung 13 verbunden und klemmen die Montagestangen 6, 14 ein.

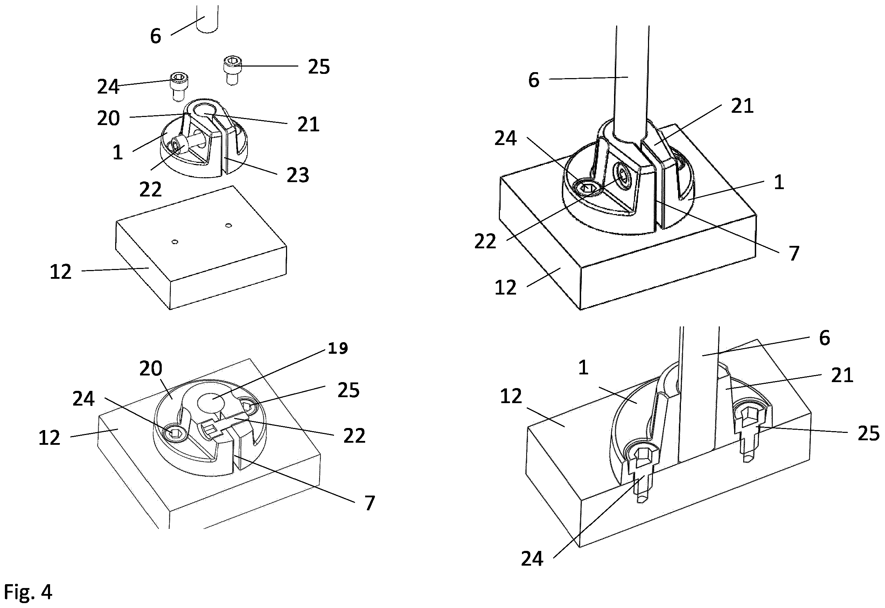

Die Montagestange 6 kann auch einfach senkrecht zu einer ebenen Fläche 12 montiert werden, wie es in Fig. 4 dargestellt ist. Dabei wird nur ein Befestigungselement 20 benötigt, welches einen Befestigungsflansch 21 aufweist, durch welchen die Montagestange 6 lotrecht zur ebenen Fläche 12 angeordnet ist. Hier wird die Montagestange 6 senkrecht zur ebenen Fläche 12 durch die durchgängige Öffnung 19 des Befestigungselementes 20 in diese eingeführt. Über eine Schraubverbindung 22 wird der Spalt 23, welcher sich an die Öffnung 19 anschließt, zusammengedrückt und die Montagestange 6 so gehalten. Das Befestigungselement 20 selbst wird mittels einer kraftschlüssigen Verbindung (Schrauben 24, 25) an der ebenen Fläche 12 befestigt.

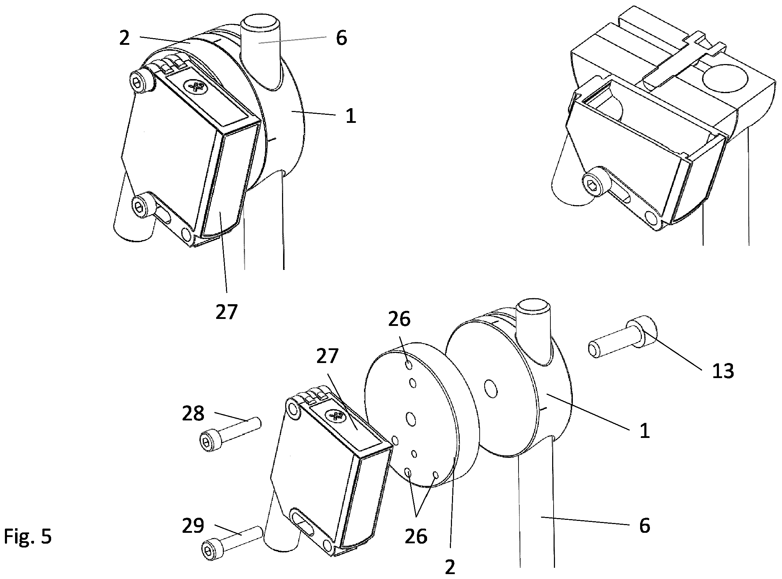

Bei solchen Befestigungseinheiten ist es häufig notwendig, dass Sensoren von diesen gehalten werden müssen, wie in Fig. 5 dargestellt. Für eine einfache Sensormontage ist das zweite Befestigungselement 2 mit Gewindebohrungen 26 versehen, wobei die verschiedenen Gewindebohrungen 26 eine Rasterung zur Aufnahme unterschiedlicher Sensoren bilden. Der Sensor 27 wird dabei einfach auf das zweite Befestigungselement 2 aufgeschraubt (Schrauben 28, 29). Die Verbindung zwischen den beiden Befestigungselementen 1, 2 wird einfach über die zentrische Schraubverbindung 13 realisiert.

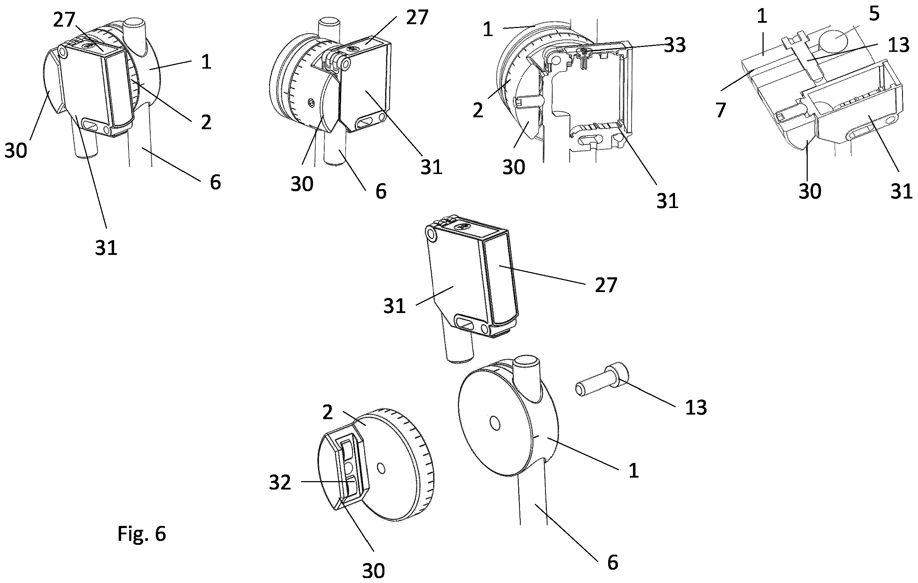

In Fig. 6 ist eine sogenannte Docking-Station für den Sensor 27 an der Montagestange 6 dargestellt. Dabei umfasst das erste Befestigungselement 1 in der beschriebenen Art und Weise die Montagestange 6. An dem zweiten Befestigungselement 2 ist eine Schwalbenschwanzaufnahme 30 auf der, dem ersten Befestigungselement 1 abgewandten Seite angeordnet. Der Sensor 27 selbst ist in eine Schwalbenschwanzgeometrie 31 eingesetzt, welche in die Schwalbenschwanzaufnahme 30 durch Überwindung von Federelementen 32 eingreift. Das so ausgebildete zweite Befestigungselement 2 wird wieder über die zentrische Schraubverbindung 13 mit dem ersten Befestigungselement 1 verbunden. In der Schwalbenschwanzgeometrie 31 ist eine Madenschraube 33 mit gefedertem Kugelkopf enthalten, welche den Sensor 27 in der Schwalbenschwanzgeometrie 31 hält. Auch die Federelemente 32 tragen zur mechanischen Fixierung bei. Die Madenschraube 33 greift dabei in eine nicht weiter dargestellte Mulde oder Bohrung am Gehäuse des Sensors 27 auf einer Zwischenfläche der Schwalbenschwanzgeometrie 31 ein und bildet somit eine Positionsmarke, was bedeutet, dass beim Auswechseln des Sensors 27 der neue Sensor 27 in genau derselben Position in der Schwalbenschwanzgeometrie 31 angeordnet wird, wie der vorhergehende Sensor 27.

In einer nicht weiter dargestellten Ausführung kann die Docking-Station zusätzlich zu der Positionsmarkierung des Sensors 27 auch gleichzeitig die elektrische Kontaktierung des Sensors 27 realisieren. Hierzu muss eine Anschlusssteckergeometrie in die Schwalbenschwanzgeometrie 31 mit aufgenommen werden. Die elektrische Kontaktierung erfolgt dann direkt beim Aufschieben des Sensors 27 in die Schwalbenschwanzgeometrie 31. Die Schwalbenschwanzgeometrie 31 des Sensors 27 wird hierbei durchgängig gestaltet, d.h. der Sensor 27 kann von oben aufgeschoben und nach unten abgezogen werden oder umgekehrt. Alternativ kann, um den Sensor 27 gegen unbeabsichtigtes Herausziehen nach unten, z.B. durch Ziehen an einem Kabel, zu sichern, ein Festanschlag gesetzt werden. In diesem Fall kann der Sensor 27 nur von oben aufgeschoben und auch nur wieder nach oben entnommen werden.

Anstatt der beschriebenen Madenschraube 33 mit gefederter Druckkugel kann auch eine einfache Madenschraube verwendet werden, welche nach dem Festziehen in der Halterung die Position des Sensors gegen Herausziehen sichert.

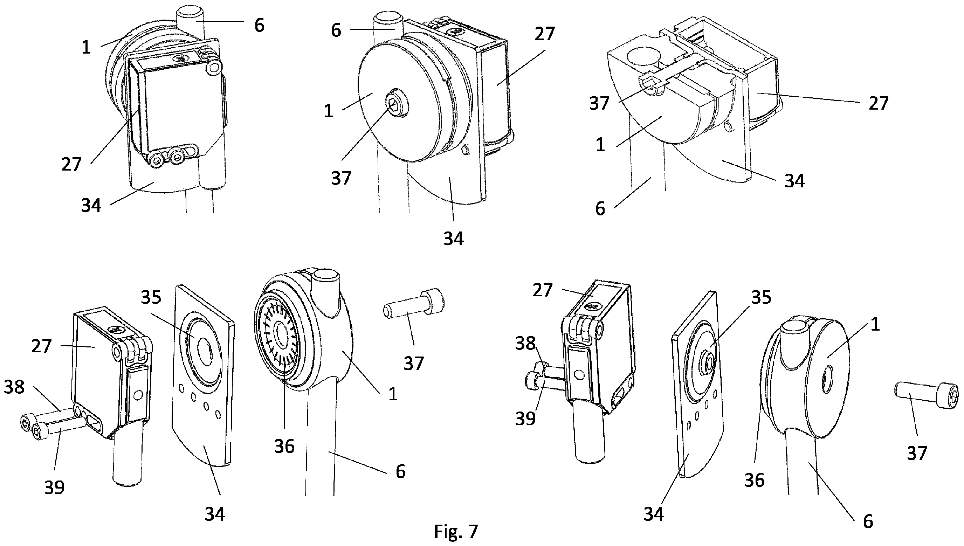

Um Halteplatten 34 für Sensoren, die zur Montage des Sensors 27 an sich bekannt sind, an der vorgeschlagenen Befestigungseinheit zu befestigen, wird gem. Fig. 7 die Halteplatte 34 zwischen dem ersten Befestigungselement 1 und dem Sensor 27 angeordnet. Diese Halteplatte 34 weist zentrisch ein Gewinde 35 in einem tiefgezogenen Bereich auf. Dieser tiefgezogene Bereich greift in eine hervortretende Durchgangsbohrung 36 ein, die an der, dem Sensor 27 zugewandten Seite des Befestigungselementes 1 ausgebildet ist. Auch hier wird die Halteplatte 34 zentrisch über eine Schraubverbindung 37 mit dem Befestigungselement 1 verbunden, wobei gleichzeitig eine Verspannung der Montagestange 6 erfolgt. Anstelle des Gewindes 35 kann auch eine Gewindemutter in die Halteplatte 34 eingeschraubt werden. Um die Verdrehfestigkeit der Halteplatte 34 mit dem Befestigungselement 1 zu erhöhen, kann hier eine Verzahnung eingefügt oder eine möglichst raue Oberfläche erzeugt werden. Der Sensor 27 selbst wird über eine kraftschlüssige Verbindung (Schrauben 38, 39) an der Halteplatte (34) befestigt.

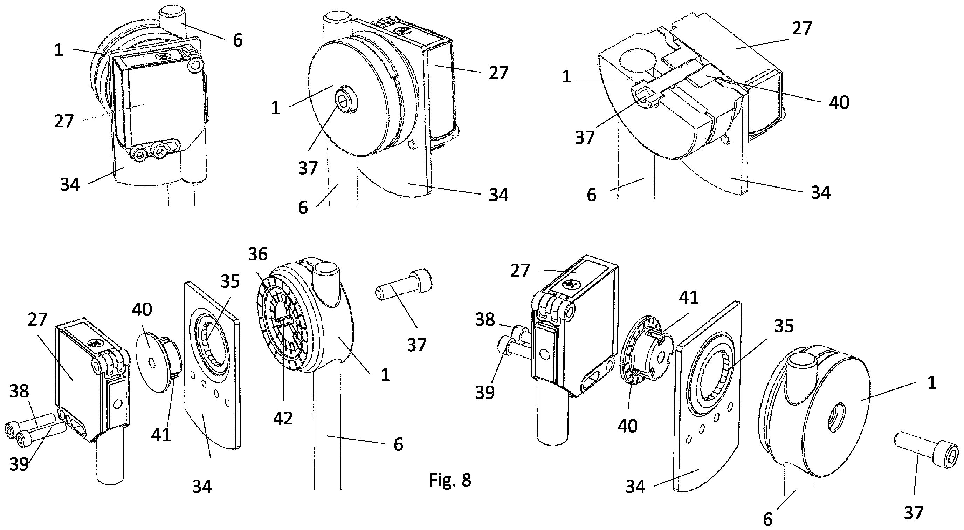

Um die Halteplatte 34 vor Verdrehung zu schützen, wird in das Gewinde 35 der Halteplatte 34 eine Verdrehsicherung 40 als Zusatzteil eingeführt (Fig. 8). Diese Verdrehsicherung 40 greift durch die Halteplatte 34 in die Durchgangsbohrung 36 des Befestigungselementes 1 ein, wobei in der Verdrehsicherung 40 Nuten 41 ausgebildet sind, in welche Vorsprünge 42, die im Gegengewinde 36 des ersten Befestigungselementes 1 ausgebildet sind, eingreifen. Damit wird sichergestellt, dass bei der Verschraubung von Halteplatte 34 und Befestigungselement 1 keinerlei Drehmomenteinflüsse auf die Halteplatte 34 ausgeübt werden, da sich die Verdrehsicherung 40 gegen Verdrehung an dem ersten Befestigungselement 1 abstützt. Insbesondere wird dabei ein Spiel zwischen Befestigungselement 1 und Halteplatte 34 des Sensors 27 durch die an dem Befestigungselement 1 ausgebildeten Vorsprünge 42 aus der Befestigungseinheit herausgenommen. Diese Verdrehsicherung 40 übt dabei auf die Halteplatte 34 lediglich eine axiale Anpresskraft aus. Die Verdrehfestigkeit wird rein über die Reibkräfte der Verdrehsicherung 40 und des Befestigungselementes 1 auf die dazwischenliegende Halteplatte 34 übertragen.

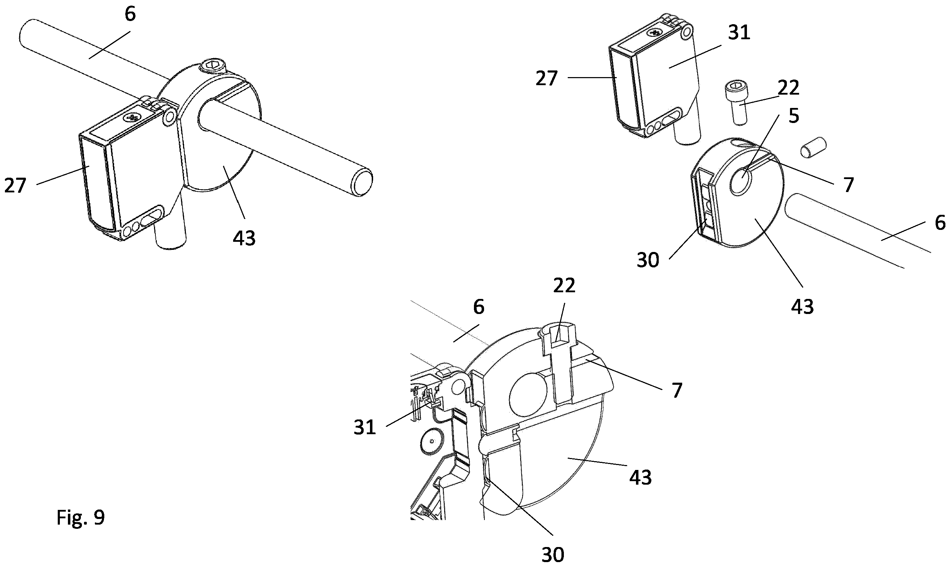

In Fig. 9 ist ein weiteres Ausführungsbeispiel der erfindungsgemäßen Befestigungseinheit dargestellt, bei welchem der Sensor 27 querhängend zur Montagestange 6 an einem einzelnen Befestigungselement 43 angeordnet ist. Das Befestigungselement 43 umfasst die Montagestange 6 mit der durchgehenden Öffnung 5, wobei durch die Schraubverbindung 22 der Spalt 7, welcher von der Öffnung 5 ausgeht, seitlich verringert wird, um die Montagestange 6 an dem Befestigungselement 43 zu fixieren. Das Befestigungselement 43 weist dabei seitlich eine integrale Schwalbenschwanzaufnahme 30 auf, in welche die den Sensor 27 haltende Schwalbenschwanzgeometrie 31 einfach eingesetzt wird.

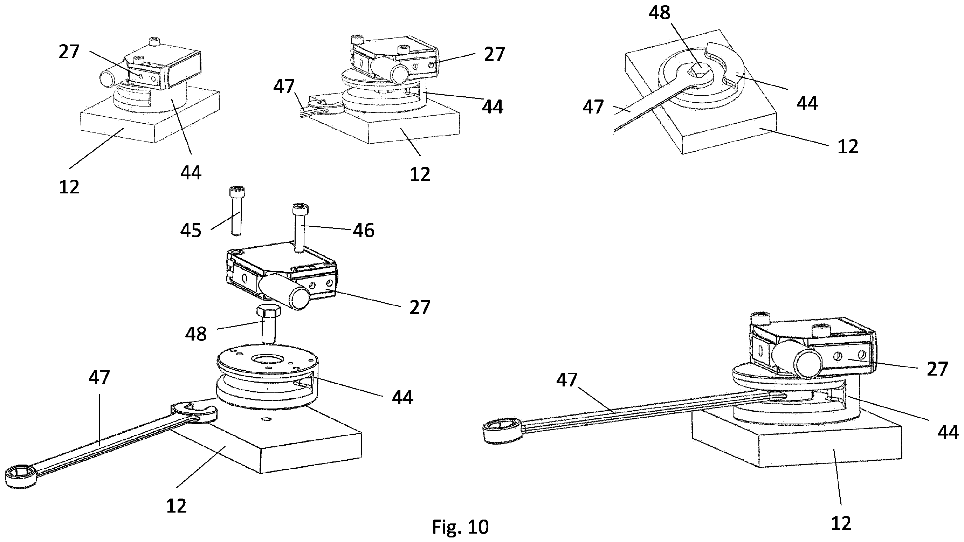

Der Sensor 27 kann aber auch an der ebenen Fläche 12 befestigt werden, wie es das weitere Ausführungsbeispiel in Fig. 10 zeigt. Das Befestigungselement 44 bildet dabei eine drehbare Schnittstelle des Sensors 27, wobei der Sensor 27 auf dem Befestigungselement 44 mit den Schrauben 45, 46 aufgeschraubt ist und sich parallel zur ebenen Fläche 12 ausdehnt. Diese Anordnung ist sehr platzsparend, da die Drehachse im Zentrum des Sensors 27 liegt und die Befestigung des Befestigungselementes 44 mit der ebenen Fläche 12 durch einen seitlich einschiebbaren Gabelschlüssel 47 erfolgen kann. Die Montageschraube 48 wird hierbei vor dem Sensor 27 in das Befestigungselement 44 eingelegt. Vor dem Festziehen der Montageschraube 48 kann der Sensor 27 auf sein Ziel ausgerichtet werden und anschließend über die zentrische Verschraubung fixiert werden.

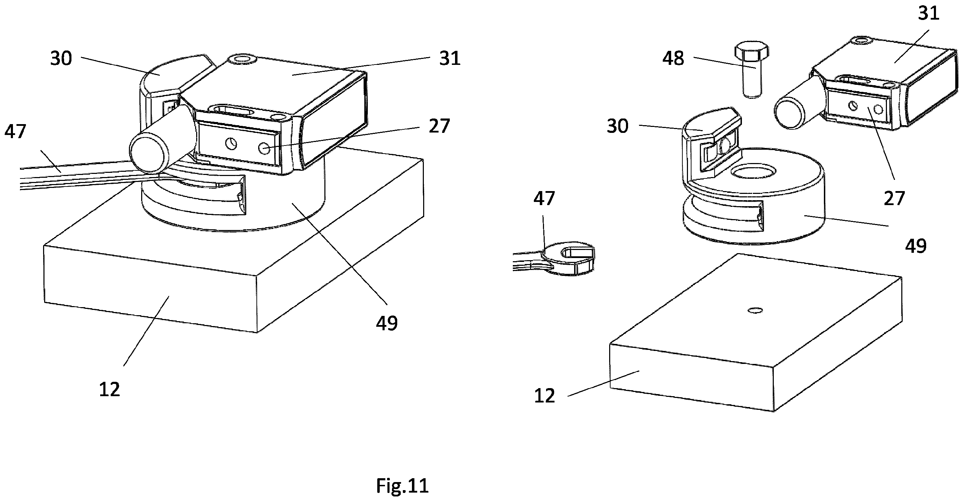

Eine solche Montage an der ebenen Fläche 12 ist, wie in Fig. 11 gezeigt, auch jederzeit möglich, wenn ein Befestigungselement 49 verwendet wird, welches eine außen an dem Befestigungselement 49 ausgebildete Schwalbenschwanzaufnahme 30 umfasst. Der Sensor 27 ist wiederum in der Schwalbenschwanzgeometrie 31 positioniert, die einfach in die Schwalbenschwanzaufnahme 30 eingesteckt wird. Dabei wird zunächst die Montageschraube 48 eingeführt und anschließend der Sensor 27 mit dem Befestigungselement 49 verbunden und vor Einfügen der Montagestange 6 die zentrische Verschraubung fixiert.

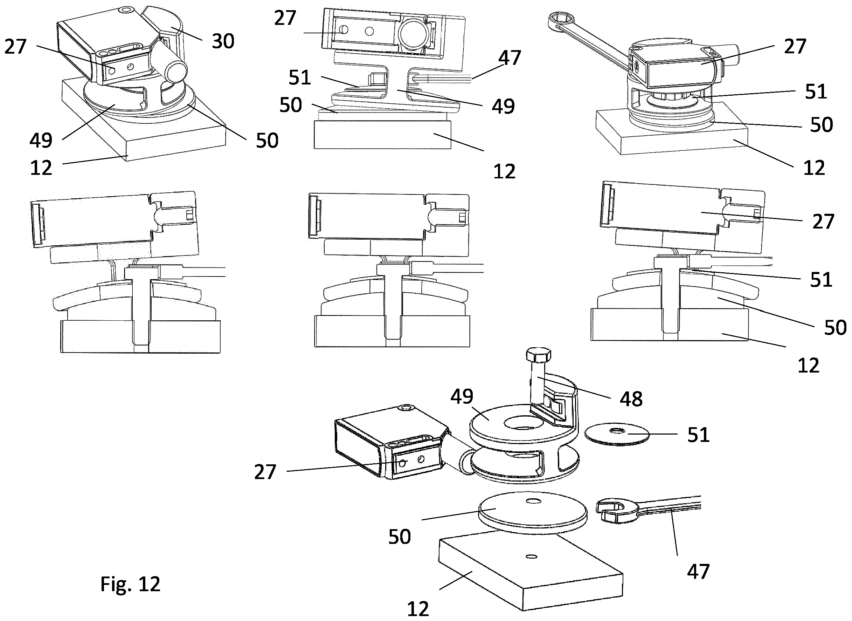

In einem weiteren Ausführungsbeispiel der erfindungsgemäßen Befestigungseinheit, welches in Fig. 12 näher dargestellt ist, ist zwischen der, den Sensor 27 tragenden Befestigungseinheit 49 und der ebenen Fläche 12 eine Halteplatte 50 eingelegt, welche auf der, der ebenen Fläche 12 zugewandten Seite plan ausgebildet ist, während die dem Sensor 27 zugewandte Seite eine konvex-sphärische Ausbildung aufweist. Bei der Montage wird unter die Montageschraube 48 eine Unterlegscheibe 51 in das Befestigungselement 49 eingelegt, welche ebenfalls eine sphärische Geometrie aufweist. Somit wird in einem gewissen Rahmen ein verdreh- und schwenkbares System erzeugt, welches in der beschriebenen Art und Weise mit der zentrischen Montageschraube 48 über die seitliche Zugänglichkeit des ausgewählten Befestigungselementes 49 fixiert werden kann. Aufgrund der sphärischen Gestaltung der Halteplatte 50 kann der Sensor 27 in seiner Position räumlich fein abgestimmt werden.

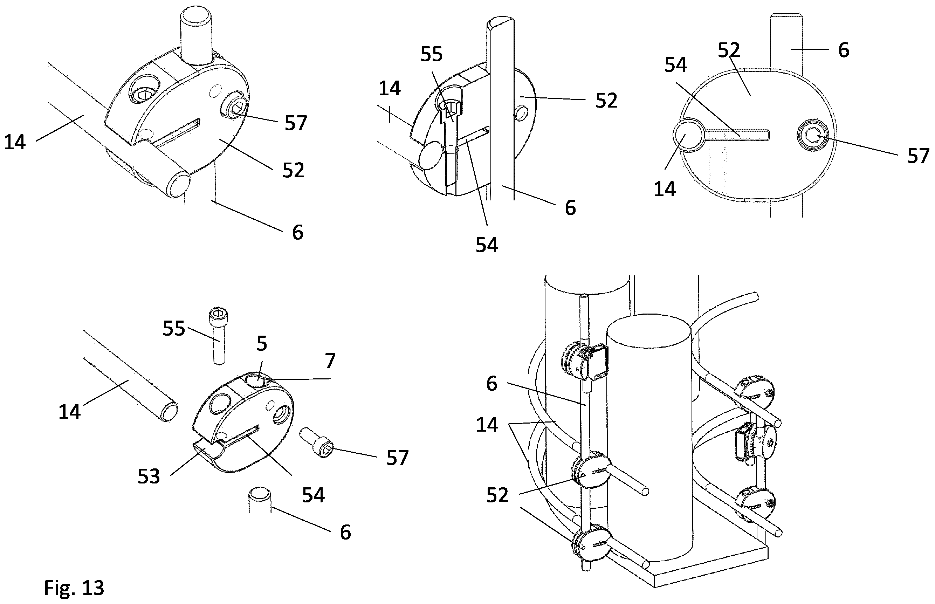

In Fig. 13 ist ein weiteres Ausführungsbeispiel der erfindungsgemäßen Befestigungseinheit an einem stehenden Montagestangensystem dargestellt. Das Befestigungselement 52 weist dabei eine dezentral angeordnete durchgehende Bohrung 5 für die Montagestange 6 auf, die in der beschriebenen Art und Weise zum Rand hin in einen Spalt 7 übergeht, wobei die Verschraubung des Spaltes 7 die Montagestange 6 fixiert. Eine zweite Aufnahme 53 für eine weitere Montagestange 14 erstreckt sich dabei ebenfalls durchgehend nahe dem Rand des Befestigungselementes 52, wobei ein Spalt 54 sich in Richtung Zentrum des Befestigungselementes 52 ausdehnt. Dies hat den Vorteil, dass sich die weitere Montagestange 14 einfach in die, in der Nähe des Randes des Befestigungselementes 52 befindliche Aufnahme 53 einklemmen lässt und ebenfalls durch eine kraftschlüssige Verbindung (Schraube 55), die den Spalt 54 durchgreift, befestigt wird. Die Aufnahme 53 führt hier zu einem Formschluss mit der Stange 14. Da der Formschluss aber nur leicht über den maximalen Stangendurchmesser von Stange 14 hinausgeht und quasi "nicht" übergreift, können Transportgüter an der Stange 14 entlanggleiten, ohne das Befestigungselement 52 zu berühren.

Ein solches Befestigungselement 52 hat den Vorteil, dass es in die Fertigungsstraße nicht hineinragt, so dass es nicht zur Kollision oder zur Aufstauung mit den zu transportierenden Gütern kommen kann.

Da eine Montagestangenführung, wie in Fig. 13 gezeigt, meist aus zwei übereinander laufenden Montagestangen 14 besteht, werden zwei Befestigungselemente 52 an der jeweiligen Montagestange 14 befestigt. Vorteil ist hierbei auch, dass keine weitere Befestigungsmontageplatte an die Fertigungslinie befestigt werden muss.

Der Vorteil dieses Haltesystems besteht darin, die sowieso bereits vorhandenen Führungsstangen zu nutzen, um mit diesem Haltesystem noch die Sensoren anzubringen.

Die Montagestange 14 wird hierbei nicht vollständig umschlungen, sondern es wird nur leicht über die Stangenmitte hinweg gegriffen, so dass im verschraubten Zustand ein Hinterschnitt entsteht und das Befestigungselement 52 nicht abgezogen werden kann. Durch die hintere Querbohrung 5 der Befestigungselemente 52 wird die zur Befestigung des Sensors 27 genutzte Montagestange 6 eingeführt und via Schrauben 57 verklemmt.

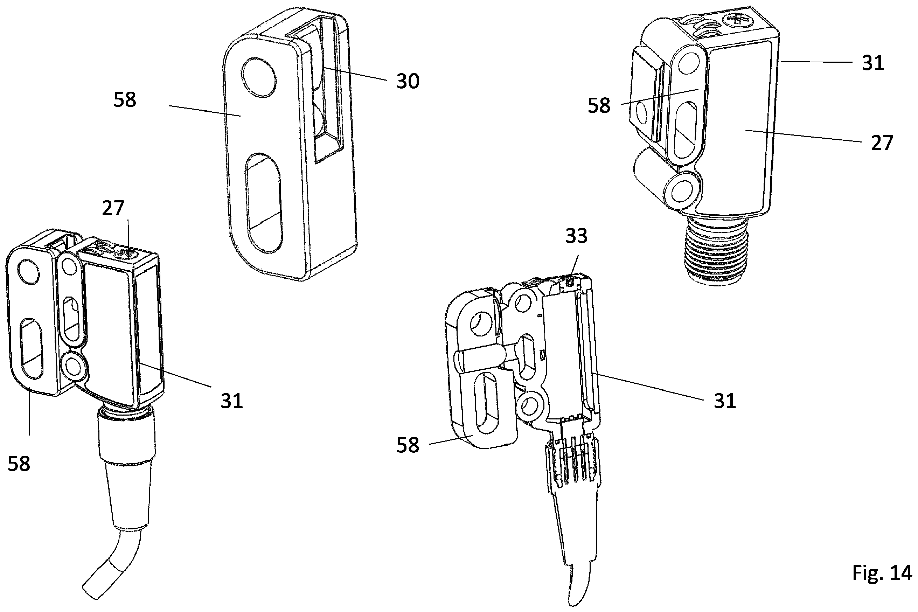

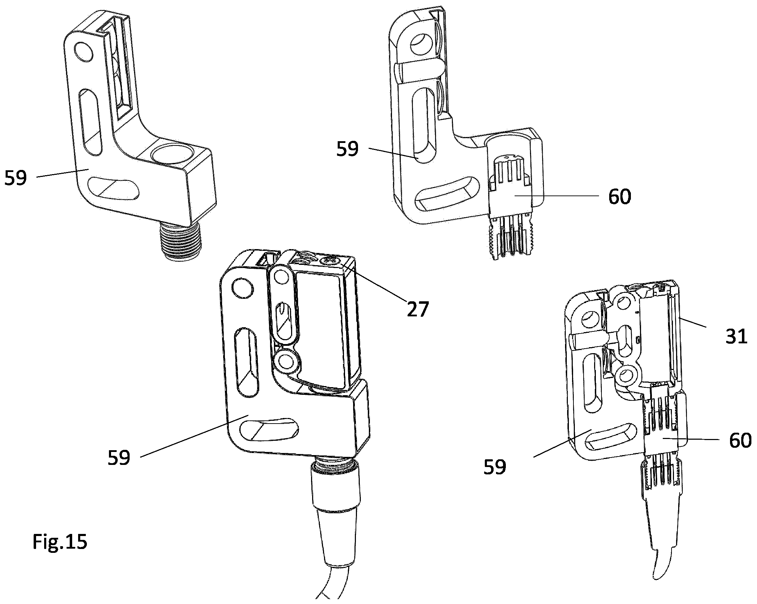

Eine quaderförmig ausgebildete Befestigungseinheit 58, welche unabhängig von der scheibenförmigen Geometrie des Befestigungselementes 52 ausgebildet ist, ist in Fig. 14 gezeigt. In dieser Befestigungseinheit 58 ist seitlich eine Schwalbenschwanzaufnahme 30 integriert, in die die, den Sensor 27 aufnehmende Schwalbenschwanzgeometrie 31 eingesetzt wird. Die Schwalbenschwanzgeometrie 31 verfügt wiederum über eine Positionsmarkierung für den Sensor 27. Die Positionsmarkierung wird durch die Madenschraube 33 mit oder ohne gefederte Druckkugel oder eine Kombination dieser Elemente gebildet. Gemäß Fig. 15 kann eine solche Befestigungseinheit 59 auch eine elektrische Kontaktierung in Form eines Anschlusssteckers 60 aufweisen. Dabei ist die Befestigungseinheit 59 vorteilhafterweise winkelförmig ausgebildet und weist eine verdeckte Abdichtung zwischen Sensor 27 und Anschlussstecker 60 in der Befestigungseinheit 59 auf. Diese Abdichtung kann durch ein sehr weiches Dichtelement mit geringerer Verpresskraft erfolgen. Alternativ ist der Sensor 27 auch ohne Anschlussstecker 60 bereits dicht und benötigt keine weitere Abdichtung für den Anschlussbereich.

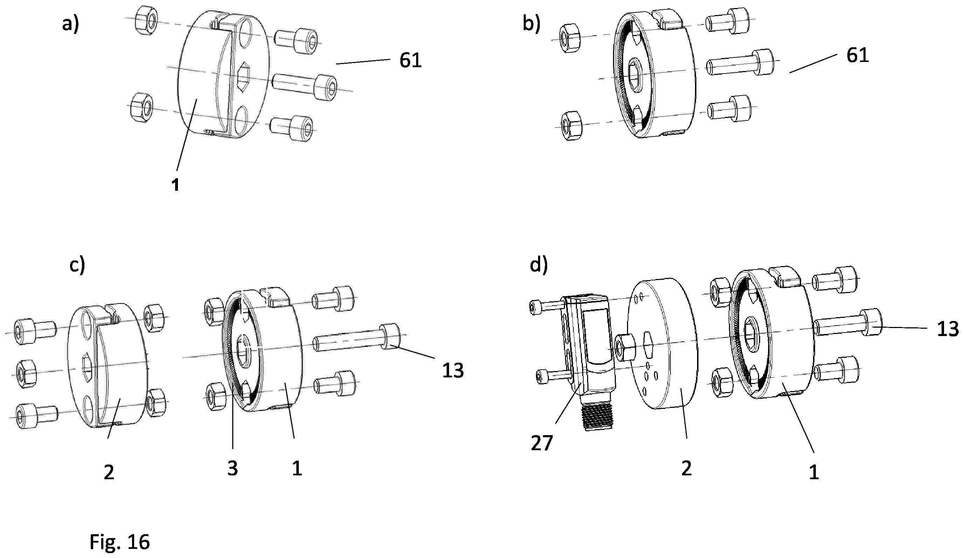

Ein Ausführungsbeispiel in Fig. 16 zeigt eine Universalbefestigungseinheit 61, bestehend aus einer Befestigungseinheit 1 und mehreren optionalen Schraubbefestigungen, welches zur Befestigung an drei Befestigungspunkten geeignet ist. Diese drei Befestigungspunkte stellen die Befestigung der Befestigungseinheit 1 an einer ebenen Fläche (Fig. 16a, Fig. 16b), die Befestigung zweier Befestigungseinheiten 1, 2 an einem Zwischenbefestigungspunkt zwischen zwei Montagestangen in Form eines Gelenks (Fig. 16c) und die Befestigung der Befestigungseinheit 1 an einem Befestigungspunkt für die Sensoraufnahme (Fig.16d) dar. Grundsätzlich bietet die Universalbefestigungseinheit mehrere Lösungsansätze für die drei Befestigungspunkte.

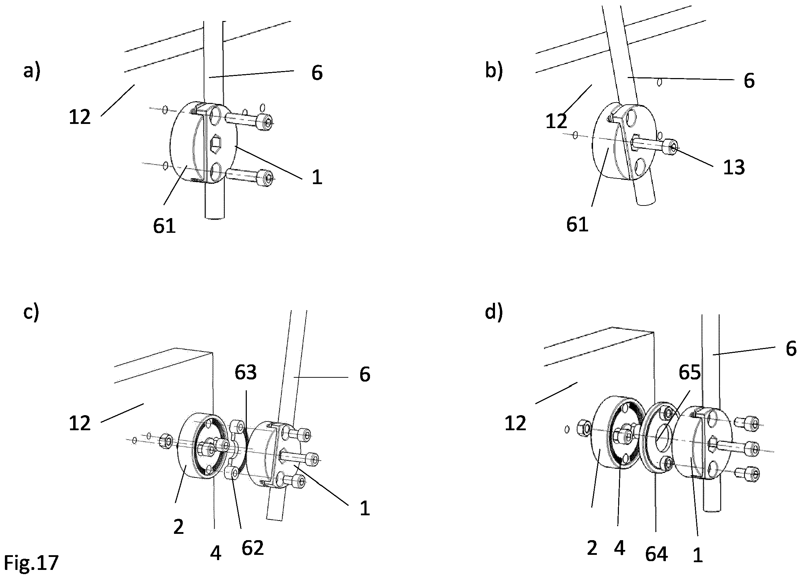

Um eine solche Universalbefestigungseinheit 61 an der ebenen Fläche 12 zu befestigen, wird die Montagestange 6 durch das erste Befestigungselement 1 eingeschoben, wobei durch zwei durchgehende Bohrungen je eine Schraubbefestigung an der ebenen Fläche 12 erfolgt. Dabei ist keine Verdrehmöglichkeit der Universalbefestigungseinheit 61 möglich. Diese Variante (Fig.17a) bietet eine höhere Robustheit.

Wird allerdings, wie in Fig. 17b gezeigt, eine zentrale Schraubverbindung 13 durch das Universalbefestigungseinheit 61 gewählt, so ist eine Verdrehmöglichkeit vorhanden.

Um eine Sicherheit gegen Verdrehung zu erhöhen, kann gemäß Fig. 17c ein zusätzlicher sichelförmiger Adapter 62 mit integrierter Verzahnung 63 in die Universalbefestigungseinheit 61 eingelegt werden, indem dieser zwischen dem ersten und dem zweiten Befestigungselement 1, 2 angeordnet wird (Fig. 17c). Der Adapter 64 hat grundsätzlich die gleiche Funktion wie die sichelförmige Variante des Adapters 62, die Verdrehsicherung beider Befestigungseinheiten zu generieren. Zusätzlich kann dieser Adapter 64 aber auch verwendet werden, um die Montage der Halteplatte 34 zu ermöglichen. Der Adapter 64 weist eine Durchgangsbohrung 65 auf. In den beiden Domen befinden sich jeweils Gewinde, um die kleinen Schrauben zu montieren.

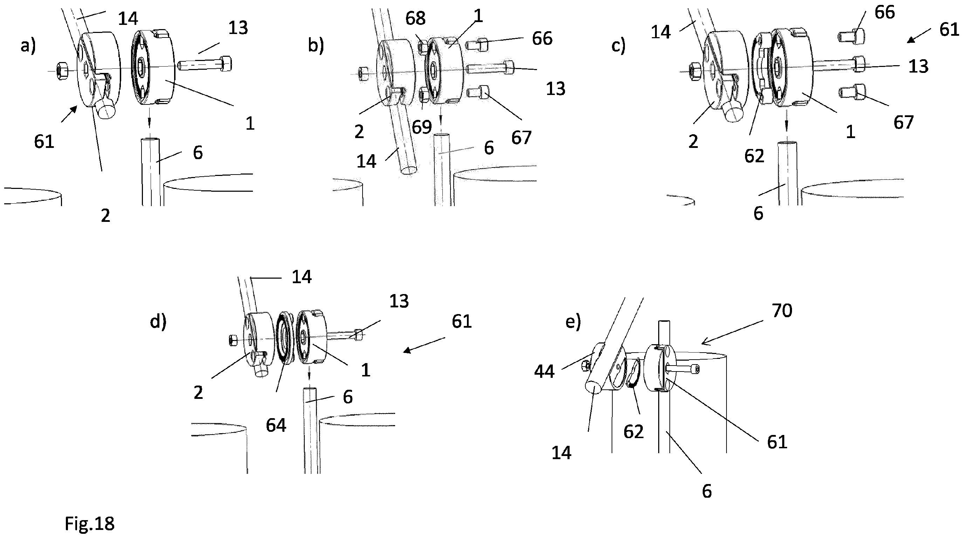

In Fig. 18 ist ein weiteres Ausführungsbeispiel der Universalbefestigungseinheit 61 dargestellt, bei welchem diese eine gelenkähnliche Verbindung zur Arretierung zweier Montagestangen 6, 14 darstellt. In einer einfachen Ausführung, wie sie in Fig. 18a dargestellt ist, wird in die zwei Befestigungselemente 1, 2 je eine Montagestange 6, 14 eingeführt, wobei die beiden Befestigungselemente 1, 2 über die zentrale Schraubverbindung 13 aneinander fixiert werden. Zusätzlich kann ein Befestigungselement 1, 2 auch mit zwei weiteren Schrauben 66, 67 und Muttern 68, 69 auf einer Montagestange 6, 14 gegen axiales Verschieben und gegen Verdrehung um die Montagestange 6, 14 fixiert werden, wobei eine Verdrehung der beiden Befestigungselemente 1, 2 gegeneinander noch weiterhin möglich ist, wie in Fig. 18b gezeigt.

Eine Vorfixierung ist ebenfalls mit den Adaptern 62, 64 mit Verzahnung, wie sie in den Fig. 18c und 18d dargestellt sind, möglich. Figur 18c zeigt dabei, dass die beiden, den die Verzahnung tragenden sichelförmigen Adapter 62 einschließenden Befestigungselemente 1, 2 der Universalbefestigungseinheit 61 mit einer Schraubverbindung 13 und zwei Arretierschrauben verbunden sind, welche die Verdrehsicherung darstellen. In Fig. 18d ist nur die zentrale Schraubverbindung 13 für die Befestigung der Adapters 64 notwendig. In Fig. 18e ist eine Variante der Universalbefestigungseinheit 70 dargestellt, mit welcher unterschiedliche Stangendurchmesser mittels einer Universalbefestigungseinheit 61 und einem weiteren Befestigungselement 1 realisiert werden können.

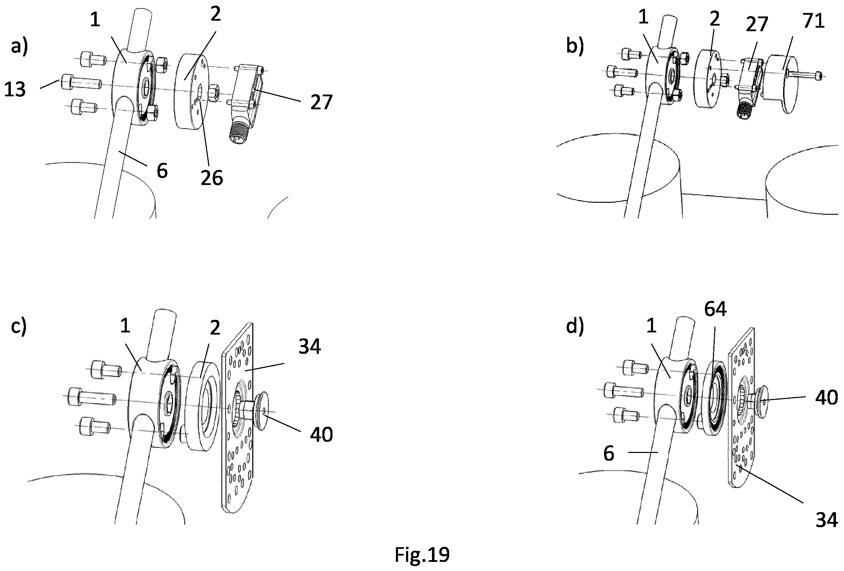

Auf der Universalbefestigungseinheit 61 kann auch ein Sensor 27 befestigt werden, indem das Befestigungselement 2 als Sensorplatte genutzt wird, auf welcher in Abhängigkeit des Bohrlochmusters 26 der Sensorplatte unterschiedliche Sensoren montiert werden können. In Fig. 19a wird die Sensorplatte nur mittels einer zentralen kraftschlüssigen Schraubverbindung 13 befestigt, was gegenüber axialem Verschieben auf der Montagestange 6 und Verdrehen um die Montagestange 6 schützt, so dass nur noch ein Drehen der durch das zweite Befestigungselement 2 gebildeten Sensorplatte gegenüber dem Befestigungselement 1 möglich ist. Wie in Fig. 19b dargestellt, kann auf die Sensorplatte ein zusätzlicher Rammschutz 71 befestigt werden, was den Sensor 27 schützt. Fig. 19c zeigt einen Aufbau, bei welchem eine, an sich bekannte Halteplatte 34 des Sensors 27 an der Universalbefestigungseinheit 61 angeordnet wird. Dabei wird die Halteplatte 34 über eine Verdrehsicherung 40, die die Halteplatte 34 durchgreift, befestigt. Die in Fig. 19d dargestellte Variante hat den Vorteil, dass mittels der Verwendung der Adapterblechklemmung des Adapters 64 auch gleichzeitig die Verdrehsicherung 40 verwendet werden kann. Der dabei als Montagering ausgebildete Adapter 64 weist eine Verzahnung auf, welche der Verzahnung der Universalbefestigungseinheit 61 entspricht und zwischen den beiden Befestigungselementen 1, 2 montiert werden kann.

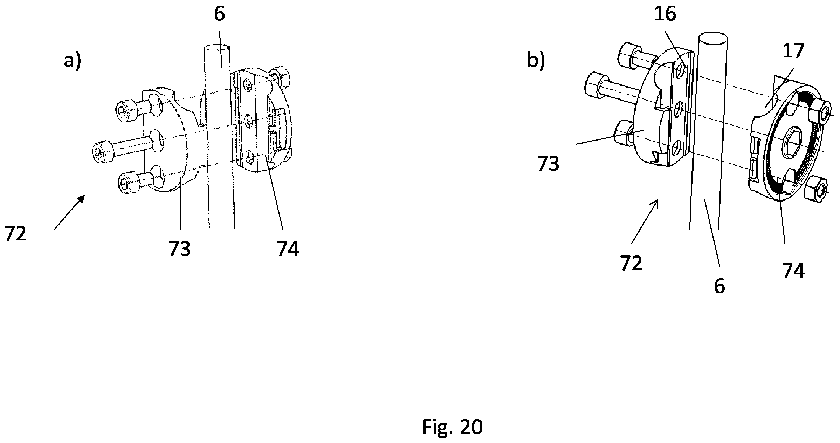

In Fig. 20 wird eine Universalbefestigungseinheit 72 dargestellt, welche aus einem Befestigungselement besteht, das zweiteilig ausgebildet ist. Diese zweiteilige Ausgestaltung des Befestigungselementes bietet die Möglichkeit, die Befestigungseinheit direkt an der Montagestange 6 ohne Aufziehen zu befestigen. Dabei werden die, das Befestigungselement bildenden beiden Klemmhalter 73, 74 um die Montagestange 6 angelegt und miteinander verschraubt. Die Montagestange 6 greift dabei in jeweils eine halbkreisförmige Nut 16, 17 jedes Klemmhalters 73, 74 ein. Eine formschlüssige Gelenkverbindung kann durch das Einlegen eines Zusatzteiles in Form einer verzahnten Scheibe hergestellt werden, welche formschlüssig in die Gegen-verzahnung des Befestigungselementes 67 eingreift Das Drehmoment kann durch das Einlegen des als Zahnscheibe ausgebildeten Adapters 64 vergrößert werden. Alternativ wird das Drehmoment durch eine definierte raue Oberfläche der Kontaktflächen des Befestigungselementes erzeugt.

Die formschlüssige Verzahnung ermöglicht eine Rasterung in den Gelenkpunkten und erhöht die Belastbarkeit der Befestigungseinheit gegen Verstellung deutlich. Die Verzahnung kann durch ein zusätzliches Einlegeteil oder direkt über die Verzahnung in beiden Befestigungselementen erfolgen. Die Verzahnung kann dabei sowohl für die Befestigung der Befestigungseinheit an einer Anlage als auch für eine Zwischenpunktbefestigung zwischen zwei Montagestangen in Form eines Gelenkes sowie für den Befestigungspunkt eines Sensors genutzt werden. Dabei kann die Verzahnung offen oder verdeckt erfolgen, wobei eine verdeckte Ausführung eine geringere Schmutzanfälligkeit nach sich zieht. Die Docking-Station mit der Schwalbenschwanzführung stellt einen Schnellverschluss dar.

### Bezugszeichen:

1 Befestigungselement
2 Befestigungselement
3 Verzahnung
4 Verzahnung
5 Öffnung
6 Montagestange
7 Spalt
8 Öffnung
9 Öffnung
10 Schraube
11 Schraube
12 ebene Fläche
13 Schraubverbindung
14 Montagestange
15 Abzweigelement
16 Halbschale
17 Halbschale
18 Halbschale
19 durchgängige Öffnung
20 Befestigungselement
21 Befestigungsflansch
22 Schraubverbindung
23 Spalt
24 Schraube
25 Schraube
26 Gewindebohrungen
27 Sensor
28 Schraube
29 Schraube
30 Schwalbenschwanzaufnahme
31 Schwalbenschwanzgeometrie
32 Federelemente
33 Madenschraube
34 Halteplatte
35 Gewinde
36 Durchgangsbohrung
37 Schraubverbindung
38 Schraube
39 Schraube
40 Verdrehsicherung
41 Nuten
42 Vorsprünge
43 Befestigungselement
44 Befestigungselement
45 Schraube
46 Schraube
47 Gabelschlüssel
48 Montageschraube
49 Befestigungselement
50 Halteplatte
51 Unterlegscheibe
52 Befestigungselement
53 Aufnahme
54 Spalt
55 Schraube
57 Schraube
58 Befestigungseinheit
59 Befestigungseinheit
60 Anschlussstecker
61 Universalbefestigung
62 Adapter
63 Verzahnung
64 Adapter
65 Durchgangsbohrung
66 Schraube
67 Schraube
68 Mutter
70 Universalbefestigungseinheit
71 Rammschutz
72 Universalbefestigungseinheit
73 Klemmhalter
74 Klemmhalter

## Patentansprüche

1. Befestigungseinheit zur Befestigung eines Sensors an einem Montagekörper oder einer Anlage, wobei die Befestigungseinheit aus zwei scheibenförmig ausgebildeten Befestigungselementen (1, 2) besteht, welche formschlüssig über eine Verzahnung (3, 4, 62, 64) miteinander verbunden sind, wobei die Verzahnung in wenigstens einer der Befestigungselemente (1, 2) integriert ist, direkt im gegenseitigen Eingriff ist und den Formschluss generiert und das erste Befestigungselement (1) zur Umschlingung einer Montagestange (6) eine durchgängige Öffnung (5) aufweist, wobei die Öffnung (5) in einen Spalt (7) übergeht, welcher das Befestigungselement (1) nach außen radial teilweise trennt, **dadurch gekennzeichnet, dass** die beiden Befestigungselemente (1, 2) über eine zentrische Verbindung (13) kraftschlüssig miteinander verbunden sind, wodurch gleichzeitig durch Einengung des Spaltes (7) die Montagestangen (6, 14) fixiert werden, wobei zur formschlüssigen Verbindung die beiden Befestigungselemente (1, 2) auf der einander zugewandten Seite jeweils eine Verzahnung (3, 4), vorzugsweise eine Verrasterung, aufweisen, die ineinander greifen.

2. Befestigungseinheit nach Anspruch 1, **dadurch gekennzeichnet, dass** das zweite Befestigungselement (2) mindestens eine erste Bohrung (8, 9) zur Aufnahme eines ersten kraftschlüssigen Verbindungselementes (10, 11) zur Befestigung des zweiten Befestigungs-elementes (2) an einer Fläche (12) aufweist, während sowohl das erste als auch zweite Befestigungselement (1, 2) eine zweite Bohrung zur Aufnahme eines zweiten kraftschlüssigen Verbindungselementes (13) zur Befestigung des ersten Befestigungselementes (1) an dem zweiten Befestigungselement (2) umfassen, wobei die zweite Bohrung des ersten Befestigungselementes (1) durchgängig ausgebildet ist.

3. Befestigungseinheit nach Anspruch 1, **dadurch gekennzeichnet, dass** das erste und das zweite Befestigungselement (1, 2) je eine durchgängige Öffnung (5) zur Aufnahme der Montagestange (6, 14) aufweisen, wobei jede Öffnung (5) radial in einen Spalt (7) übergeht, welcher kraftschlüssig zur Fixierung der jeweiligen Montagestange (6, 14) verengt wird.

4. Befestigungseinheit mit einem Sensor nach Anspruch 1, **dadurch gekennzeichnet, dass** der Sensor (27) eine Schwalbenschwanzgeometrie (31) aufweist, welche in eine an einer Außenseite des zweiten Befestigungselementes (2) positionierte Schwalbenschwanzaufnahme (30) eingreift.

5. Befestigungseinheit nach Anspruch 4, **dadurch gekennzeichnet, dass** der Sensor (27) in der Schwalbenschwanzgeometrie (31) positioniert ist, wobei die den Sensor (27) aufnehmende Schwalbenschwanzgeometrie (31) eine Positionsmarkierung (33) aufweist.

6. Befestigungseinheit mit einem Sensor nach Anspruch 1, **dadurch gekennzeichnet, dass** eine Halteplatte (34) des Sensors (27) zentrisch auf einem Befestigungselement (1) angeordnet ist, wobei die Halteplatte (34), vorzugsweise zentrisch, ein Gewinde (35) mit einem tiefgezogenen Bereich aufweist, das in eine, an dem am Befestigungs-element (1) ausgebildete Durchgangsbohrung (36) eingreift.

7. Befestigungselement nach Anspruch 6, **dadurch gekennzeichnet, dass** zwischen Sensor (27) und Halteplatte (34) eine Verdrehsicherung (40) geklemmt ist, wobei die Verdrehsicherung ein Gegengewinde aufweist.

8. Befestigungseinheit mit einem Sensor nach mindestens einem der vorhergehenden Ansprüche, **dadurch gekennzeichnet, dass** das Befestigungselement (43) quer zu der Montagestange (6) angeordnet ist und der Sensor direkt an einer Aufnahme des Befestigungselements (43) angeordnet ist.

9. Befestigungseinheit mit einem Sensor nach mindestens einem der vorhergehenden Ansprüche, **dadurch gekennzeichnet, dass** der Sensor (27) über eines der Befestigungselemente (1, 2) an der ebenen Fläche (12) befestigt ist, wobei das Befestigungselement (1, 2) eine drehbare Schnittstelle für den Sensor (27) bildet.

10. Befestigungseinheit nach mindestens einem der vorhergehenden Ansprüche, **dadurch gekennzeichnet, dass** zwischen der ebenen Fläche (12) und dem Befestigungselement (49) eine Schwenkplatte (50) angeordnet ist, welche gegenüber der ebenen Fläche (12) eine plane Seite und gegenüber dem Befestigungselement (49) eine konkav-sphärisch ausgebildete Seite aufweist.

11. Befestigungseinheit nach Anspruch 1, **dadurch gekennzeichnet, dass** das Befestigungselement (52) dezentral zwei durchgängige, radial offene Aufnahmen (5, 53) für je eine Montagestange (6, 14) aufweist, die annähernd senkrecht zueinander ausgebildet sind, wobei die Aufnahme (53) nahe einem Rand des Befestigungselementes (52) ausgebildet ist und in Richtung Zentrum des Befestigungselementes (52) einen sich radial erstreckenden Spalt (54) zur axial reibschlüssigen und radial formschlüssigen Befestigung der Montagestange (14) an dem Befestigungselement (52) einschließt.

## Claims

1. A fastening unit for fastening a sensor to an installation body or to a system, wherein the fastening unit comprises two disk-shaped fastening elements (1, 2) that are connected to one another in a shape-matched manner via a toothed arrangement (3, 4, 62, 64), with the toothed arrangement being integrated in at least one of the fastening elements (1, 2), being directly in mutual engagement and generating the shape matching, and with the first fastening element (1) having a throughgoing opening (5) to surround an installation bar (6), with the opening (5) merging into a gap (7) that partly separates the fastening element (1) radially outwardly, **characterized in that** the two fastening elements (1, 2) are connected to one another in a force-transmitting manner via a central connection (13), whereby the installation bars (6, 14) are simultaneously fixed by constriction of the gap (7), with the two fastening elements (1, 2) having respective toothed arrangements (3, 4), preferably locking arrangements, that engage into one another at the mutually facing side for the shape-matched connection.

2. A fastening unit in accordance with claim 1, **characterized in that** the second fastening element (2) has at least one first bore (8, 9) for receiving a first force-transmitting connection element (10, 11) for fastening the second fastening element (2) to a surface (12), while both the first and second fastening elements (1, 2) comprise a second bore for receiving a second force-transmitting connection element (13) for fastening the first fastening element (1) to the second fastening element (2), with the second bore of the first fastening element (2) being throughgoing.

3. A fastening unit in accordance with claim 1, **characterized in that** the first and second fastening elements (1, 2) each have a throughgoing opening (5) for receiving the installation bar (6, 14), with each opening (5) merging radially into a gap (7) that is constricted in a force-transmitting manner to fix the respective installation bar (6, 14).

4. A fastening unit having a sensor in accordance with claim 1, **characterized in that** the sensor (27) has a dovetail geometry (31) that engages into a dovetail mount (30) positioned at an outer side of the second fastening element (2).

5. A fastening unit in accordance with claim 4, **characterized in that** the sensor (27) is positioned in the dovetail geometry (31), with the dovetail geometry (31) receiving the sensor (27) having a position mark (33).

6. A fastening unit in accordance with claim 1, **characterized in that** a holding plate (34) of the sensor (27) is centrally arranged on a fastening element (1), with the holding plate (34) having, preferably centrally, a thread (35) with a deep-drawn region that engages into a passage bore (36) formed at the fastening element (1).

7. A fastening element in accordance with claim 6, **characterized in that** a security against rotation (40) is clamped between the sensor (27) and the holding plate (34), with the security against rotation having a mating thread.

8. A fastening unit having a sensor in accordance with at least one of the preceding claims, **characterized in that** the fastening element (43) is arranged transversely to the installation bar (6) and the sensor is arranged directly at a mount of the fastening element (43).

9. A fastening unit having a sensor in accordance with at least one of the preceding claims, **characterized in that** the sensor (27) is fastened to the planar surface (12) via one of the fastening elements (1, 2), with the fastening element (1, 2) forming a rotatable interface for the sensor (27).

10. A fastening unit in accordance with at least one of the preceding claims, **characterized in that** a pivot plate (50) is arranged between the planar surface (12) and the fastening element (49), said pivot plate having a planar side opposite the planar surface (12) and having a concave spherical side opposite to the fastening element (49).

11. A fastening unit in accordance with claim 1, **characterized in that** the fastening element (52) decentrally has two throughgoing radially open mounts (5, 53) for one respective installation bar (6, 14) each that are formed approximately perpendicular to one another, with the mount (53) being formed close to a margin of the fastening element (52) and enclosing a radially extending gap (54) in the direction of the center of the fastening element (52) for an axially frictionally engaged and radially shape-matched fastening of the installation bar (14) to the fastening element (52).

## Revendications

1. Unité de fixation pour fixer un capteur sur un corps de montage ou sur une installation, dans laquelle l'unité de fixation est constituée par deux éléments de fixation (1, 2) réalisés en forme de disques qui sont reliés l'un à l'autre par coopération de formes par une denture (3, 4, 62, 64), la denture est intégrée dans l'un au moins des éléments de fixation (1, 2), en engagement mutuel direct, et procure la coopération de formes, et le premier élément de fixation (1) comprend une ouverture traversante (5) pour encercler un barreau de montage (6), l'ouverture (5) se transforme en une fente (7) qui sépare partiellement l'élément de fixation (1) radialement vers l'extérieur, **caractérisée en ce que** les deux éléments de fixation (1, 2) sont reliés l'un à l'autre par coopération de forces par une liaison centrée (13), fixant en même temps les barreaux de montage (6, 14) par rétrécissement de la fente (7), et pour la liaison en coopération de formes, les deux éléments de fixation (1, 2) présentent sur les côtés tournés l'un vers l'autre chacun une denture (3, 4), de préférence un enclenchement, qui viennent s'engager l'un(e) dans l'autre.

2. Unité de fixation selon la revendication 1, **caractérisée en ce que** le second élément de fixation (2) présente au moins un premier perçage (8, 9) pour recevoir un premier élément (10, 11) de liaison par coopération de forces pour fixer le second élément de fixation (2) sur une surface (12), tandis qu'aussi bien le premier que le second élément de fixation (1, 2) présentent un second perçage pour recevoir un second élément (13) de liaison par coopération de forces pour fixer le premier élément de fixation (1) sur le second élément de fixation (2), le second perçage du premier élément de fixation (1) étant réalisé traversant.

3. Unité de fixation selon la revendication 1, **caractérisée en ce que** le premier et le second élément de fixation (1, 2) présentent chacun une ouverture traversante (5) pour recevoir le barreau de montage (6, 14), chaque ouverture (5) se transformant en une fente (7) qui se rétrécit par coopération de forces pour fixer le barreau de montage respectif (6, 14).

4. Unité de fixation comportant un capteur selon la revendication 1, **caractérisée en ce que** le capteur (27) présente une géométrie en queue d'aronde (31) qui vient s'engager dans un logement en queue d'aronde (30) positionné sur un côté extérieur du second élément de fixation (2).

5. Unité de fixation selon la revendication 4, **caractérisée en ce que** le capteur (27) est positionné dans la géométrie en queue d'aronde (31), et la géométrie en queue d'aronde (31) qui reçoit le capteur (27) présente un repère de positionnement (33).

6. Unité de fixation comportant un capteur selon la revendication 1, **caractérisée en ce que** une plaque de retenue (34) du capteur (27) est agencée de façon centrée sur l'élément de fixation (1), et la plaque de retenue (34) présente de préférence au centre un pas de vis (35) ayant une zone emboutie qui vient s'engager dans un perçage traversant (36) ménagé au niveau de l'élément de fixation (1).

7. Unité de fixation selon la revendication 6, **caractérisée en ce que** un blocage anti-rotation (40) est serré entre le capteur (27) et la plaque de retenue (34), le blocage anti-rotation présentant un pas de vis antagoniste.

8. Unité de fixation comportant un capteur selon l'une au moins des revendications précédentes, **caractérisée en ce que** l'élément de fixation (43) est agencé transversalement au barreau de montage (6) et le capteur est agencé directement au niveau d'un logement de l'élément de fixation (43).

9. Unité de fixation comportant un capteur selon l'une au moins des revendications précédentes, **caractérisée en ce que** le capteur (27) est fixé sur la surface plane (12) par l'un des éléments de fixation (1, 2), l'élément de fixation (1, 2) formant une interface rotative pour le capteur (27).

10. Unité de fixation selon l'une au moins des revendications précédentes, **caractérisée en ce que** une plaque de basculement (50) est agencée entre la surface plane (12) et l'élément de fixation (49), ladite plaque présentant une face plane en regard de la surface plane (12) et une face réalisée concave-sphérique en regard de l'élément de fixation (49).

11. Unité de fixation selon la revendication 1, **caractérisée en ce que** l'élément de fixation (52) présente de façon décentrée deux logements traversants (5, 53) radialement ouverts pour un barreau de montage respectif (6, 14), qui sont réalisés approximativement perpendiculairement l'un à l'autre, le logement (53) étant réalisé près d'un bord de l'élément de fixation (52) et incluant en direction du centre de l'élément de fixation (52) une fente (54) qui s'étend radialement pour la fixation axialement en coopération de friction et radialement en coopération de formes du barreau de montage (14) sur l'élément de fixation (52).
